# EUROPÄISCHE PATENTSCHRIFT

(11) **EP 2 301 826 B1**
(45) Veröffentlichungstag und Bekanntmachung des Hinweises auf die Patenterteilung: **08.05.2013**
(21) Anmeldenummer: 10176665.7
(22) Anmeldetag: 14.09.2010
(51) Int. Cl.: B62D 27/02, F16B 11/00

(54) **Knotenelement für eine Fahrzeugrahmenstruktur**
Node element for a vehicle framework
Elément nodal de connection pour une structure de châssis de véhicule

(30) Priorität: 22.09.2009 DE 102009029657
(43) Veröffentlichungstag der Anmeldung: 30.03.2011
(73) Patentinhaber: DEERE & COMPANY, Moline, Illinois 61265-8098 (US)
(72) Erfinder: Knaebel, Harald, 76228, Karlruhe (DE)
(74) Vertreter: Dehnhardt, Florian Christopher

(56) Entgegenhaltungen:
- WO-A1-2008/147213
- DE-A1- 2 707 492
- DE-A1- 2 728 306
- DE-U1- 9 419 777
- GB-A- 2 012 649
- US-A- 5 228 259

## Beschreibung

Die Erfindung betrifft ein Knotenelement für eine Fahrzeugrahmenstruktur, mit einem Befestigungsflansch zur Herstellung einer Verbindung mit einem Rahmenhohlprofil.

Ein derartiges Knotenelement in Gestalt einer Klebemuffe geht aus der DE 94 19 777 U1 hervor. Die Klebemuffe weist einen Aufnahmeabschnitt zur Verklebung eines Hohlprofils auf, wobei auf der Innenseite des Aufnahmeabschnitts ein in sich geschlossener Verteilerkanal zur Injektion eines Klebstoffs ausgebildet ist. Die Injektion des Klebstoffs erfolgt hierbei über eine in der Klebemuffe ausgebildete Einspritzöffnung. Des Weiteren weist die Klebemuffe eine Austrittsöffnung auf, mittels derer kontrolliert werden kann, ob der Verteilerkanal ausreichend mit Klebstoff gefüllt ist. Aufgrund der in sich geschlossenen Ausbildung des Verteilerkanals besteht die Möglichkeit, dass die darin vorhandene Luft bei der Injektion des Klebstoffs nur teilweise herausgedrängt wird. Dies führt letztlich zu einer unvollständigen Füllung des Verteilerkanals mit Klebstoff und damit zu schwankenden Klebeergebnissen.

Ein Knotenelement gemäß dem Oberbegriff des Anspruchs 1 ist aus der US 5 228 253 A bekannt.

Es ist daher Aufgabe der vorliegenden Erfindung, ein Knotenelement der eingangs genannten Art hinsichtlich der Gewährleistung gleichbleibender Klebeergebnisse zu verbessern.

Diese Aufgabe wird durch ein Knotenelement mit den Merkmalen des Patentanspruchs 1 gelöst. Vorteilhafte Ausgestaltungen des Knotenelements gehen aus den Unteransprüchen hervor.

Das erfindungsgemäße Knotenelement für eine Fahrzeugrahmenstruktur umfasst einen Befestigungsflansch zur Herstellung einer Verbindung mit einem Rahmenhohlprofil, wobei der Befestigungsflansch einen im Wesentlichen quer zu einer Aufschieberichtung des Rahmenhohlprofils schraubenförmig umlaufenden Klebstoffkanal aufweist. Wird in den Klebstoffkanal bei aufgeschobenem Rahmenhohlprofil ein Klebstoff injiziert, wozu in dem Rahmenhohlprofil oder dem Knotenelement eine in den Klebstoffkanal mündende Klebstoffinjektionsöffnung vorgesehen ist, so breitet sich dieser sukzessive entlang des Umfangs des Befestigungsflanschs unter vollständiger Verdrängung der im Klebstoffkanal befindlichen Luft aus. Letztere entweicht über eine in dem Rahmenhohlprofil oder dem Knotenelement vorgesehene Klebstoffkontrollöffnung, die in räumlichem Abstand zur Klebstoffinjektionsöffnung in den Klebstoffkanal mündet. Die Injektion des Klebstoffs erfolgt dabei solange, bis dieser aus der Klebstoffkontrollöffnung austritt, sodass sichergestellt ist, dass der Klebstoffkanal vollständig mit Klebstoff gefüllt ist. Schwankende Klebeergebnisse aufgrund unerwünschter Lufteinschlüsse lassen sich auf diese Weise zuverlässig vermeiden.

Vorteilhafte Ausgestaltungen des Knotenelements gehen aus den Unteransprüchen hervor.

Bei dem Klebstoff kann es sich entweder um einen Einkomponentenklebstoff auf Methylacrylatbasis oder aber einen Zweikomponentenklebstoff auf Epoxydharzbasis handeln. Zusätzlich oder alternativ ist auch die Verwendung anaerob oder unter Wärme härtender Klebstoffe möglich.

Der Klebstoffkanal verläuft vorzugsweise auf der Außenseite des Befestigungsflanschs des Knotenelements. Die Innenseite des Rahmenhohlprofils ist in diesem Fall zumindest in einem zur Aufnahme des Knotenelements vorgesehenen Befestigungsbereich glatt ausgebildet. Das Rahmenhohlprofil wird beispielsweise aus einer geeigneten Stahllegierung nahtlos gezogen. Alternativ kann es sich auch um ein Walzprofil oder - im Falle der Verwendung von Leichtmetalllegierungen - um ein Strangpressprofil handeln.

Zur Injektion des Klebstoffs weist der Klebstoffkanal insbesondere einen Klebstoffeintrittsbereich und einen Klebstoffaustrittsbereich auf, wobei die beiden Bereiche den beiden äußeren Enden des Klebstoffkanals zugeordnet sein können. Durch Aufschieben und/oder Aufpressen des Rahmenhohlprofils auf das Knotenelement lässt sich die in dem Rahmenhohlprofil ausgebildete Klebstoffinjektionsöffnung bzw. Klebstoffkontrollöffnung mit dem Klebstoffeintrittsbereich bzw. Klebstoffaustrittsbereich des Klebstoffkanals in Deckung bringen. Vorzugsweise ist der Klebstoffeintrittsbereich bzw. Klebstoffaustrittsbereich bezüglich seiner Geometrie an diejenige der Klebstoffinjektionsöffnung bzw. Klebstoffkontrollöffnung des Rahmenhohlprofils angepasst, sodass ein definierter Ein- bzw. Austritt des injizierten Klebstoffs in den bzw. aus dem Klebstoffkanal gewährleistet ist.

Zur Herstellung einer mechanischen Fügeverbindung zwischen dem Knotenelement und dem Rahmenhohlprofil kann das Rahmenhohlprofil derart ausgebildet bzw. bemessen sein, dass beim Aufschieben und/oder durch anschließendes Aufschrumpfen oder Kaltdehnen ein elastischer oder plastischer Formschluss zwischen dem Knotenelement und dem Rahmenhohlprofil hergestellt wird. Das Aufschrumpfen bzw. Kaltdehnen des Rahmenhohlprofils erfolgt im Allgemeinen thermisch, alternativ kann jedoch auch eine Magnetumformung des Rahmenhohlprofils bzw. eine Innenhochdruckumformung des Knotenelements im Bereich des Befestigungsabschnitts erfolgen. Auch die Herstellung einer Crimpverbindung nach dem Aufschieben des Rahmenhohlprofils auf das Knotenelement ist denkbar. In letzterem Fall kann der Klebstoff im Klebstoffkanal vorappliziert sein, wobei vorzugsweise ein sogenannter mikroverkapselter Klebstoff Verwendung findet, der bei Herstellung der Crimpverbindung druckaktiviert wird.

Ferner ist es möglich, dass das Rahmenhohlprofil aufgrund des elastischen oder plastischen Formschlusses eine in den Klebstoffkanal zumindest teilweise eingreifende Sicke ausbildet. Die Sicke greift nur insoweit in den Klebstoffkanal ein, als eine problemlose Injektion des Klebstoffs in den Klebstoffkanal sichergestellt ist. Die mechanische Fügeverbindung wirkt sich nicht nur stabilisierend auf die Fahrzeugrahmenstruktur aus, sondern fixiert zugleich das Rahmenhohlprofil gegenüber dem Knotenelement bis zur vollständigen Aushärtung des in den Klebstoffkanal injizierten Klebstoffs.

Der Klebstoffkanal ist durch benachbarte Windungen eines schraubenförmigen Stegs gebildet, der in Gestalt einer Wendel entlang der Außenseite des Befestigungsflanschs im Wesentlichen quer zur Aufschieberichtung des Rahmenhohlprofils verläuft. Hierbei besteht die Möglichkeit, dass der insbesondere als einstückiger Bestandteil des Knotenelements ausgebildete Steg einen sich nach außen hin verjüngenden Querschnitt aufweist, sodass bei Herstellung der mechanischen Fügeverbindung zwischen dem Knotenelement und dem Rahmenhohlprofil eine Ausbildung der Sicke am Rahmenhohlprofil begünstigt wird.

Um die Verdrehfestigkeit der zwischen dem Rahmenhohlprofil und dem Knotenelement hergestellten Verbindung zu erhöhen, besteht die Möglichkeit, dass der Befestigungsflansch in Bezug auf die Aufschieberichtung des Rahmenhohlprofils einen im Wesentlichen rechteckigen Querschnitt aufweist. Das Rahmenhohlprofil ist hierbei zumindest in dem zur Aufnahme des Knotenelements vorgesehenen Befestigungsbereich mit einem korrespondierenden rechteckigen Querschnitt versehen. Es sei angemerkt, dass in diesem Zusammenhang grundsätzlich auch andere Querschnittsformen möglich sind. So ist für den Fall komplexer Fahrzeugrahmenstrukturen aufgrund der besseren Formbarkeit auch eine Verwendung von Rahmenprofilen mit rundem Querschnitt denkbar.

Das aus einer geeigneten Stahl- oder Leichtmetalllegierung bestehende Knotenelement kann einstückig als Guss- und/oder Schmiedeteil oder aber durch Hochdruckumformen eines als Hohlprofil ausgebildeten Rohlings hergestellt werden. Alternativ ist auch eine mehrteilige Bauweise denkbar, bei der das Knotenelement aus mehreren miteinander verschweißten schalenförmigen Einzelteilen bzw. Profilelementen besteht. Je nach Verwendungszweck des Knotenelements können mehrere Befestigungsflansche unterschiedlicher Ausrichtung und/oder Dimensionierung vorgesehen sein.

Des Weiteren ist es möglich, dass an dem Knotenelement mindestens ein Trägerelement ausgebildet ist, das insbesondere zur Befestigung von an der Fahrzeugrahmenstruktur anzubringenden Karosseriebauteilen und/oder Funktionsbauteilen vorgesehen ist. Das Trägerelement ist einstückiger bzw. integraler Bestandteil des Knotenelements. Findet die Fahrzeugrahmenstruktur für eine Fahrerkabine eines landwirtschaftlichen Nutzfahrzeugs Verwendung, so kann es sich bei den Karosseriebauteilen um verschiedene Verkleidungs- und Kabinenteile bzw. bei den Funktionsbauteilen um Elemente einer Kabinenlagerung oder dergleichen handeln. Zusätzlich oder alternativ ist es auch vorstellbar, die zwischen den Knotenelementen angeordneten Rahmenhohlprofile als Luftführungen einer Klimatisierungseinrichtung zu nutzen.

Vorzugsweise weist der Befestigungsflansch des Knotenelements eine sich verjüngende Außenkontur auf, sodass eine vereinfachte Vormontage der Fahrzeugrahmenstruktur durch loses Positionieren bzw. Ineinanderschieben der Rahmenhohlprofile und Knotenelemente möglich ist. Die sich verjüngende Außenkontur kann insbesondere konisch geformt sein.

Das erfindungsgemäße Knotenelement wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein schematisch dargestelltes Ausführungsbeispiel eines Knotenelements für eine Fahrzeugrahmenstruktur,
- Fig. 2: eine Schnittansicht einer zwischen einem Knotenelement und einem Rahmenhohlprofil hergestellten Verbindung, und
- Fig. 3: ein schematisch dargestelltes Ausführungsbeispiel des erfindungsgemäßen Knotenelements für eine Fahrzeugrahmenstruktur.

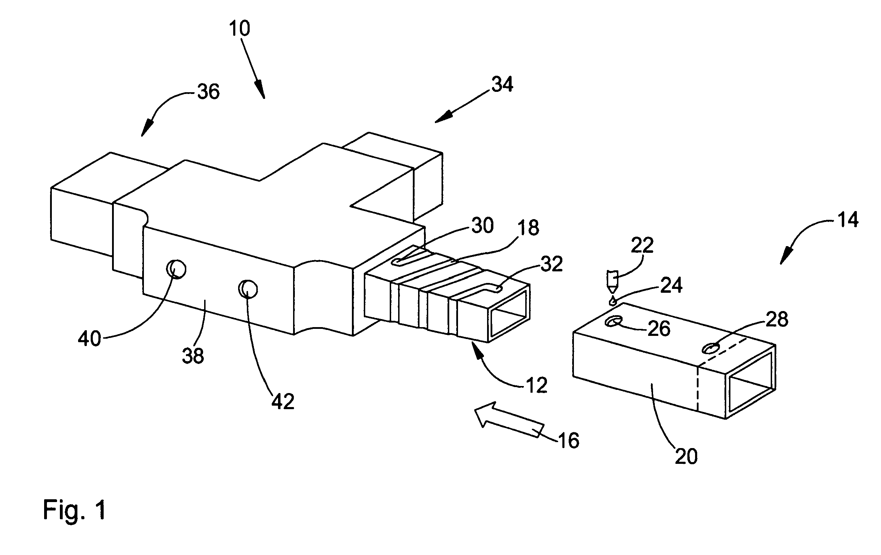

Fig. 1 zeigt ein schematisch dargestelltes Ausführungsbeispiel eines Knotenelements für eine Fahrzeugrahmenstruktur.

Das Knotenelement 10 umfasst einen Befestigungsflansch 12 zur Herstellung einer Verbindung mit einem Rahmenhohlprofil 14. Der Befestigungsflansch 12 weist einen im Wesentlichen quer zu einer Aufschieberichtung 16 des Rahmenhohlprofils 14 umlaufenden Klebstoffkanal 18 auf. Beispielsgemäß verläuft der Klebstoffkanal 18 auf der Außenseite des Befestigungsflanschs 12. Der Befestigungsflansch 12 weist in Bezug auf die Aufschieberichtung 16 des Rahmenhohlprofils 14 einen im Wesentlichen rechteckigen Querschnitt auf.

Das Rahmenhohlprofil 14 ist zumindest in einem zur Aufnahme des Knotenelements 10 vorgesehenen Befestigungsbereich 20 mit einem korrespondierenden rechteckigen Querschnitt versehen. Die Innenseite des aus einer geeigneten Stahllegierung nahtlos gezogenen Rahmenhohlprofils 14 ist zumindest in dem zur Aufnahme des Knotenelements 10 vorgesehenen Befestigungsbereich 20 glatt ausgebildet.

Wird in den Klebstoffkanal 18 bei aufgeschobenem Rahmenhohlprofil 14 mittels eines Injektionsstutzens 22 ein Klebstoff 24 injiziert, wozu in dem Rahmenhohlprofil 14 eine in den Klebstoffkanal 18 mündende Klebstoffinjektionsöffnung 26 vorgesehen ist, so breitet sich dieser sukzessive entlang des Umfangs des Befestigungsflanschs 12 unter Verdrängung der im Klebstoffkanal 18 befindlichen Luft aus. Letztere entweicht über eine in dem Rahmenhohlprofil 14 vorgesehene Klebstoffkontrollöffnung 28, die in räumlichem Abstand zur Klebstoffinjektionsöffnung 26 in den Klebstoffkanal 18 mündet. Um die gleichmäßige und luftfreie Befüllung des Klebstoffkanals 18 zu unterstützen, kann zusätzlich im Bereich der Klebstoffkontrollöffnung 28 mittels eines nicht dargestellten Ansaugstutzens ein Unterdruck erzeugt werden.

Zur Injektion des Klebstoffs 24 weist der Klebstoffkanal 18 einen Klebstoffeintrittsbereich 30 und einen Klebstoffaustrittsbereich 32 auf, wobei die beiden Bereiche 30 und 32 den beiden äußeren Enden des Klebstoffkanals 18 zugeordnet sind. Durch Aufschieben des Rahmenhohlprofils 14 auf das Knotenelement 10 lässt sich die in dem Rahmenhohlprofil 14 ausgebildete Klebstoffinjektionsöffnung 26 bzw. Klebstoffkrontrollöffnung 28 mit dem Klebstoffeintrittsbereich 30 bzw. Klebstoffaustrittsbereich 32 des Klebstoffkanals 18 in Deckung bringen. Der Klebstoffeintrittsbereich 30 bzw. Klebstoffaustrittsbereich 32 ist hierbei bezüglich seiner Geometrie an diejenige der Klebstoffinjektionsöffnung 26 bzw. Klebstoffkontrollöffnung 28 des Rahmenprofils 14 angepasst, sodass ein definierter Ein- bzw. Austritt des injizierten Klebstoffs 24 in den bzw. aus dem Klebstoffkanal 18 gewährleistet ist.

Das aus einer Stahl- oder Leichtmetalllegierung bestehende Knotenelement 10 wird einstückig als Guss- und/oder Schmiedeteil oder aber durch Hochdruckumformen eines als Hohlprofil ausgebildeten Rohlings hergestellt. Alternativ ist auch eine mehrteilige Bauweise denkbar, bei der das Knotenelement 10 aus mehreren miteinander verschweißten schalenförmigen Einzelteilen bzw. Profilelementen besteht.

Im vorliegenden Fall ist das Knotenelement 10 T-förmig ausgebildet, sodass sich an diesem neben dem Rahmenhohlprofil 14 zwei weitere Rahmenhohlprofile an zugehörigen Befestigungsflanschen 34 und 36 anbringen lassen. Die Befestigungsflansche 34 und 36 weisen zu diesem Zweck ihrerseits dem Klebekanal 18 entsprechende Klebekanäle auf, wobei diese aus Gründen der Übersichtlichkeit nicht dargestellt sind.

Beispielsgemäß ist an dem Knotenelement 10 mindestens ein Trägerelement 38 ausgebildet, das zur Befestigung von an der Fahrzeugrahmenstruktur anzubringenden Karosseriebauteilen und/oder Funktionsbauteilen vorgesehen ist. Das Trägerelement 38 ist einstückiger bzw. integraler Bestandteil des Knotenelements 10. Das Trägerelement 38 ist im vorliegenden Fall als Befestigungsplatte mit darin angeordneten Gewindebuchsen 40 und 42 veranschaulicht. Abweichend davon ist jedoch auch eine beliebige andere Ausgestaltung möglich.

Findet die Fahrzeugrahmenstruktur für eine Fahrerkabine eines landwirtschaftlichen Nutzfahrzeugs Verwendung, so kann es sich bei den Karosseriebauteilen um verschiedene Verkleidungs- und Kabinenteile bzw. bei den Funktionsbauteilen um Elemente einer Kabinenlagerung oder dergleichen handeln.

Der Befestigungsflansch 12 des Knotenelements 10 weist eine sich verjüngende Außenkontur auf, sodass eine vereinfachte Vormontage der Fahrzeugrahmenstruktur durch loses Positionieren bzw. Ineinanderschieben der Rahmenhohlprofile und Knotenelemente möglich ist. Die sich verjüngende Außenkontur ist im vorliegenden Fall konisch geformt.

Die Herstellung einer Verbindung zwischen dem Knotenelement 10 und dem Rahmenhohlprofil 14 erfolgt in zwei Schritten.

In einem ersten Schritt wird das Rahmenhohlprofil 14 auf den Befestigungsflansch 12 des Knotenelements 10 aufgeschoben. Die beiden Teile 10 und 14 können hierzu mittels einer Montagelehre zueinander positioniert werden. Zur Herstellung einer mechanischen Fügeverbindung ist das Rahmenhohlprofil 14 derart ausgebildet bzw. bemessen, dass beim Aufschieben und/oder durch anschließendes Aufschrumpfen des Rahmenhohlprofils 14 oder Kaltdehnen des Knotenelements 10 ein elastischer oder plastischer Formschluss zwischen dem Knotenelement 10 und dem Rahmenhohlprofil 14 hergestellt wird. Anschließend wird in einem zweiten Schritt der Klebstoff 24 über die Klebstoffinjektionsöffnung 26 in den Klebstoffkanal 18 injiziert. Die Injektion des Klebstoffs 24 erfolgt solange, bis dieser am anderen Ende des Klebstoffkanals 18 aus der Klebstoffkontrollöffnung 28 austritt.

Bei dem Klebstoff 24 handelt es sich um einen Einkomponentenklebstoff auf Methylacrylatbasis oder aber einen Zweikomponentenklebstoff auf Epoxydharzbasis. Zusätzlich oder alternativ ist auch die Verwendung anaerob oder unter Wärme härtender Klebstoffe möglich.

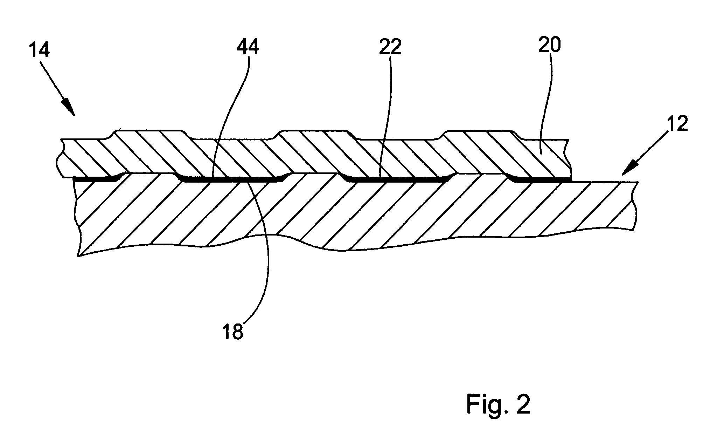

Fig. 2 zeigt eine Schnittansicht einer zwischen einem Knotenelement und einem Rahmenhohlprofil hergestellten Verbindung.

Das Rahmenhohlprofil 14 bildet aufgrund des mit dem Befestigungsflansch 12 des Knotenelements 10 hergestellten elastischen oder plastischen Formschlusses eine in den Klebstoffkanal 18 zumindest teilweise eingreifende Sicke 44 aus. Die Sicke 44 greift nur insoweit in den Klebstoffkanal 18 ein, als eine problemlose Injektion des Klebstoffs 24 in den Klebstoffkanal 18 sichergestellt ist. Der Klebstoff 24 füllt hierbei den durch den Klebstoffkanal 18 gebildeten Spalt zwischen Rahmenhohlprofil 14 und Knotenelement 10 vollständig aus. Die gleichmäßige Ausbildung der Sicke 44 wird hierbei durch die sich konisch verjüngende Außenkontur des Befestigungsflanschs 12 unterstützt.

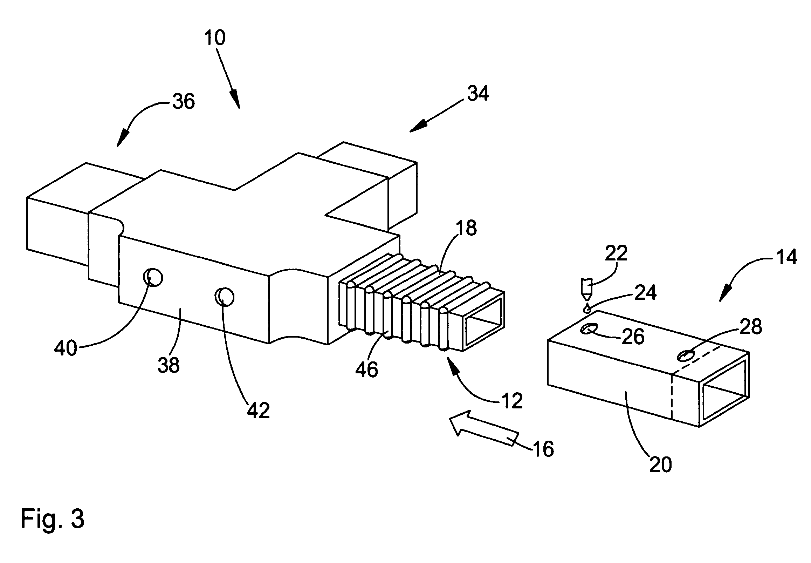

Fig. 3 zeigt ein schematisch dargestelltes Ausführungsbeispiel des erfindungsgemäßen Knotenelements für eine Fahrzeugrahmenstruktur. Dieses unterscheidet sich von dem in Fig. 2 dargestellten Ausführungsbeispiel bezüglich der Art und Weise der Ausbildung des Klebstoffkanals.

Demgemäß ist der Klebstoffkanal 18 durch benachbarte Windungen eines schraubenförmigen Stegs 46 gebildet, der in Gestalt einer Wendel entlang der Außenseite des Befestigungsflanschs 12 verläuft. Der als einstückiger Bestandteil des Knotenelements 10 ausgebildete Steg 46 weist einen sich nach außen hin Verjüngenden Querschnitt auf, sodass bei Herstellung der mechanischen Fügeverbindung zwischen Knotenelement 10 und Rahmenhohlprofil 14 eine Ausbildung der Sicke 44 am Rahmenhohlprofil 14 begünstigt wird.

## Patentansprüche

1. Knotenelement für eine Fahrzeugrahmenstruktur, mit einem Befestigungsflansch (12) zur Herstellung einer Verbindung mit einem Rahmenhohlprofil (14), wobei der Befestigungsflansch (12) einen im Wesentlichen quer zu einer Aufschieberichtung (16) des Rahmenhohlprofils (14) umlaufenden Klebstoffkanal (18) aufweist, **dadurch gekennzeichnet, dass** der klebstoffkanal (18) den Befestigungsflanch schrauben förmig umlaüft und, dass der Klebstoffkanal (18) durch benachbarte Windungen eines schraubenförmigen Stegs (46) mit einem sich nach außen hin verjüngenden Querschnitt gebildet ist, der in Gestalt einer Wendel entlang der Außenseite des Befestigungsflanschs (12) verläuft.

2. Knotenelement nach Anspruch 1, **dadurch gekennzeichnet, dass** der Klebstoffkanal (18) auf der Außenseite des Befestigungsflanschs (12) verläuft.

3. Knotenelement nach Anspruch 1 oder 2, **dadurch gekennzeichnet, dass** der Klebstoffkanal (18) einen Klebstoffeintrittsbereich (30) und einen Klebstoffaustrittsbereich (32) aufweist.

4. Knotenelement nach einem der Ansprüche 1 bis 3, **dadurch gekennzeichnet, dass** der Befestigungsflansch (12) in Bezug auf die Aufschieberichtung (16) des Rahmenhohlprofils (14) einen im Wesentlichen rechteckigen Querschnitt aufweist.

5. Knotenelement nach einem der Ansprüche 1 bis 4, **dadurch gekennzeichnet, dass** das Knotenelement (10) einstückig als Guss- und/oder Schmiedeteil oder durch Hochdruckumformen eines als Hohlprofil ausgebildeten Rohlings hergestellt ist.

6. Knotenelement nach einem der Ansprüche 1 bis 5, **dadurch gekennzeichnet, dass** an dem Knotenelement (10) mindestens ein Trägerelement (38) ausgebildet ist, wobei das Trägerelement (38) insbesondere zur Befestigung von Karosseriebauteilen und/oder Funktionsbauteilen vorgesehen ist.

7. Knotenelement nach einem der Ansprüche 1 bis 6, **dadurch gekennzeichnet, dass** der Befestigungsflansch (12) eine sich verjüngende Außenkontur aufweist.

8. Verfahren zur Herstellung einer form- und kraftschlüssigen Verbindung zwischen einem Knotenelement nach einem der Ansprüche 1 bis 6 und einem Rahmenhohlprofil, das eine mit einem Klebstoffeintrittsbereich (30) des Klebstoffkanals (18) in Deckung bringbare Klebstoffinjektionsöffnung (26) und/oder eine mit einem Klebstoffaustrittsbereich (32) des Klebstoffkanals (18) in Deckung bringbare Klebstoffkontrollöffnung (28) aufweist, **dadurch gekennzeichnet, dass** in einem ersten Schritt das Rahmenhohlprofil (14) auf den Befestigungsflansch (12) des Knotenelements (10) aufgeschoben wird, wobei das Rahmenhohlprofil (14) derart ausgebildet ist, dass beim Aufschieben und/oder durch anschließendes Aufschrumpfen oder Kaltdehnen ein elastischer oder plastischer Formschluss zwischen dem Knotenelement (10) und dem Rahmenhohlprofil (14) hergestellt wird, und dass in einem zweiten Schritt ein Klebstoff (24) über die Klebstoffinjektionsöffnung (26) in den Klebstoffkanal (18) injiziert wird.

9. Verfahren nach Anspruch 8, **dadurch gekennzeichnet, dass** der Klebstoff (24) solange in den Klebstoffkanal (18) injiziert wird, bis dieser aus der Klebstoffkontrollöffnung (28) austritt.

10. Verfahren nach Anspruch 8 oder 9, **dadurch gekennzeichnet, dass** das Rahmenhohlprofil (14) eine in den Klebstoffkanal (18) zumindest teilweise eingreifende Sicke (44) ausbildet.

11. Verfahren nach einem der Ansprüche 8 bis 10, **dadurch gekennzeichnet, dass** es sich bei dem Klebstoff (24) um einen Einkomponentenklebstoff oder einen Zweikomponentenklebstoff handelt.

## Claims

1. Nodal element for a vehicle frame structure, with a fastening flange (12) for establishing a connection with a hollow frame profile (14), wherein the fastening flange (12) comprises an adhesive channel (18) which runs around substantially transversely to a pushing-on direction (16) of the hollow frame profile (14), **characterized in that** the adhesive channel (18) runs helically around the fastening flange and **in that** the adhesive channel (18) is formed by adjacent turns of a helical web (46) which has an outwardly tapering cross section and which runs in the shape of a helix along the outside of the fastening flange (12).

2. Nodal element according to Claim 1, **characterized in that** the adhesive channel (18) runs on the outside of the fastening flange (12).

3. Nodal element according to Claim 1 or 2, **characterized in that** the adhesive channel (18) comprises an adhesive entry region (30) and an adhesive exit region (32).

4. Nodal element according to one of Claims 1 to 3, **characterized in that** the fastening flange (12) has a substantially rectangular cross section with respect to the pushing-on direction (16) of the hollow frame profile (14).

5. Nodal element according to one of Claims 1 to 4, **characterized in that** the nodal element (10) is manufactured unitarily as a casting and/or a forging or by hydroforming of a blank designed as a hollow profile.

6. Nodal element according to one of Claims 1 to 5, **characterized in that** on the nodal element (10) there is formed at least one carrier element (38), wherein the carrier element (38) is provided particularly for a fastening body components and/or functional components.

7. Nodal element according to one of Claims 1 to 6, **characterized in that** the fastening flange (12) has a tapering outer contour.

8. Method for establishing a positive and non-positive connection between a nodal element according to one of Claims 1 to 6 and a hollow frame profile, which has an adhesive injection opening (26) that can be brought into alignment with the adhesive entry region (30) of the adhesive channel (18) and/or an adhesive inspection opening (28) that can be brought into alignment with an adhesive exit region (32) of an adhesive channel (18), **characterized in that** in a first step the hollow frame profile (14) is pushed onto the fastening flange (12) of the nodal element (10), wherein the hollow frame profile (14) is designed in such a manner that, when pushing-on and/or through subsequent shrinking-on or joining by thermal expansion, an elastic or plastic positive connection between the nodal element (10) and the hollow frame profile (14) is established, and **in that** in a second step an adhesive (24) is injected into the adhesive channel (18) via the adhesive injection opening (26).

9. Method according to Claim 8, **characterized in that** the adhesive (24) is injected into the adhesive channel (18) until it exits from the adhesive inspection opening (28).

10. Method according to Claim 8 or 9, **characterized in that** the hollow frame profile (14) forms a bead (44) at least partially engaging in the adhesive channel (18).

11. Method according to one of Claims 8 to 10, **characterized in that** the adhesive (24) is a one-component adhesive or a two-component adhesive.

## Revendications

1. Elément nodal de connexion pour une structure de châssis de véhicule, avec une bride de fixation (12) pour la réalisation d'un assemblage avec un profilé creux de châssis (14), dans lequel la bride de fixation (12) présente un canal à colle périphérique (18) essentiellement transversal à une direction d'engagement (16) du profilé creux de châssis (14), **caractérisé en ce que** le canal à colle (18) entoure sous forme hélicoïdale la bride de fixation et **en ce que** le canal à colle (18) est formé par des spires voisines d'une nervure hélicoïdale (46) avec une section transversale se rétrécissant vers l'extérieur, qui s'étend sous la forme d'une hélice le long du côté extérieur de la bride de fixation (12).

2. Elément nodal de connexion selon la revendication 1, **caractérisé en ce que** le canal à colle (18) s'étend sur le côté extérieur de la bride de fixation (12).

3. Elément nodal de connexion selon la revendication 1 ou 2, **caractérisé en ce que** le canal à colle (18) présente une zone d'entrée de colle (30) et une zone de sortie de colle (32).

4. Elément nodal de connexion selon l'une quelconque des revendications 1 à 3, **caractérisé en ce que** la bride de fixation (12) présente, par rapport à la direction d'engagement (16) du profilé creux de châssis (14), une section transversale essentiellement rectangulaire.

5. Elément nodal de connexion selon l'une quelconque des revendications 1 à 4, **caractérisé en ce que** l'élément nodal de connexion (10) est réalisé en une seule pièce sous forme de pièce moulée et/ou forgée ou par déformation sous haute pression d'une ébauche réalisée sous la forme d'un profilé creux.

6. Elément nodal de connexion selon l'une quelconque des revendications 1 à 5, **caractérisé en ce qu'**au moins un élément de support (38) est formé sur l'élément nodal de connexion (10), dans lequel l'élément de support (38) est prévu en particulier pour la fixation de composants de carrosserie et/ou de composants fonctionnels.

7. Elément nodal de connexion selon l'une quelconque des revendications 1 à 6, **caractérisé en ce que** la bride de fixation (12) présente un contour extérieur qui se rétrécit.

8. Procédé pour la réalisation d'un assemblage par emboîtement et par adhérence entre un élément nodal de connexion selon l'une quelconque des revendications 1 à 6 et un profilé creux de châssis, qui présente une ouverture d'injection de colle (26) pouvant être amenée à couvrir une zone d'entrée de colle (30) du canal à colle (18) et/ou une ouverture de contrôle de colle (28) pouvant être amenée à couvrir une zone de sortie de colle (32) du canal à colle (18), **caractérisé en ce que**, dans une première étape, on engage le profilé creux de châssis (14) sur la bride de fixation (12) de l'élément nodal de connexion (10), dans lequel le profilé creux de châssis (14) est réalisé de telle manière que, lors de l'engagement et/ou par frettage ou étirage à froid consécutif, on réalise un emboîtement élastique ou plastique entre l'élément nodal de connexion (10) et le profilé creux de châssis (14), et **en ce que**, dans une deuxième étape, on injecte une colle (24) dans le canal à colle (18) par l'ouverture d'injection de colle (26).

9. Procédé selon la revendication 8, **caractérisé en ce que** l'on injecte la colle (24) dans le canal à colle (18) jusqu'à ce que celle-ci sorte par l'ouverture de contrôle de colle (28).

10. Procédé selon la revendication 8 ou 9, **caractérisé en ce que** le profilé creux de châssis (14) forme une moulure (44) s'engageant au moins partiellement dans le canal à colle (18).

11. Procédé selon l'une quelconque des revendications 8 à 10, **caractérisé en ce que** la colle (24) est une colle à un seul composant ou une colle à deux composants.
